# EUROPÄISCHE PATENTSCHRIFT

(11) **EP 3 678 842 B1**
(45) Veröffentlichungstag und Bekanntmachung des Hinweises auf die Patenterteilung: **21.06.2023**
(21) Anmeldenummer: 18768834.6
(22) Anmeldetag: 06.09.2018
(51) Int. Cl.: B29C 49/64, B29C 35/08, B29C 49/68, B29C 49/06, H05B 3/00, H05B 3/42

(54) **HAUPTREFLEKTOR FÜR EIN HEIZMODUL EINES HEIZKANALS EINER FORMMASCHINE ZUR FORMUNG VON BEHÄLTERN AUS VORFORMLINGEN**
PRIMARY REFLECTOR FOR A HEATING MODULE OF A HEATING DUCT IN A MOULDING MACHINE FOR MOULDING CONTAINERS FROM PREFORMS
RÉFLECTEUR PRINCIPAL POUR MODULE DE CHAUFFAGE D'UN CANAL DE CHAUFFAGE D'UNE MACHINE DE MOULAGE POUR LE MOULAGE DE RÉCIPIENTS À PARTIR DE PRÉFORMES

(30) Priorität: 08.09.2017 DE 102017008445
(43) Veröffentlichungstag der Anmeldung: 15.07.2020
(73) Patentinhaber: KHS GmbH, 44143 Dortmund (DE)
(72) Erfinder: LINKE, Michael, 22159 Hamburg (DE); LEWIN, Frank, 22889 Tangstedt (DE); FIRCHAU, Daniel, 23911 Schmilau (DE); ULUTÜRK, Deniz, 22761 Hamburg (DE); MEYER, Niels, 22869 Schenefeld (DE)
(74) Vertreter: Eisenführ Speiser
(86) Internationale Anmeldenummer: PCT/EP2018/074041
(87) Internationale Veröffentlichungsnummer: WO 2019/048560

(56) Entgegenhaltungen:
- WO-A1-01/62463
- WO-A1-96/32244
- WO-A1-2011/036593
- DE-U1-202004 010 454
- FR-A1- 3 022 610

## Beschreibung

Die Erfindung bezieht sich auf ein Heizmodul gemäß dem Oberbegriff des Anspruches 1.

Üblicherweise werden gattungsgemäße Heizmodule in Formmaschinen von Behältern aus Vorformlingen vorgesehen, in denen Vorformlinge aus thermoplastischem Kunststoff zunächst erwärmt werden und dann nach Erwärmung mittels Blasformung oder mittels eines Füllgutes in die gewünschte Form, z. B. in Form von Flaschen, gebracht werden.

Solche auch als Streckblasmaschinen (Blasformung) bezeichneten Maschinen weisen in der Regel eine umlaufende Fördereinrichtung auf, mit der die Vorformlinge zur thermischen Konditionierung über einen definierten Abschnitt des Transportweges durch einen Heizkanal geführt werden. Dabei werden die Vorformlinge, bzw. ihr in den Heizkanal eintauchender Bereich auf Temperaturen oberhalb des Glaspunktes des zu verarbeitenden Materials erwärmt. Gleichartige Anlagen zur Temperaturkonditionierung der Vorformlinge werden auch bei Maschinen eingesetzt, in denen Formung und Füllen eines Behälters aus Vorformlingen gleichzeitig erfolgt.

Denkbar sind natürlich auch Anlagen, in denen z. B. eine stehende Beheizung stattfindet.

Üblicherweise wird ein Heizkanal durch mindestens ein Heizmodul, bei bewegter Beheizung in der Regel durch mehrere in Transportrichtung hintereinander angeordnete und miteinander verbundene Heizmodule gebildet, wobei jedes Heizmodul jeweils einen Abschnitt des Heizkanals ausbildet.

Übliche Heizmodule definieren einen von zwei gegenüberliegenden Seitenwänden, einem Boden und einer oberen Abdeckung begrenzten Strahlungsraum. Im Bereich einer der Seitenwände des Heizmoduls sind Heizelemente vorgesehen, in der Regel horizontal ausgerichtete, in vertikaler Richtung untereinander angeordnete röhrenförmige Heizeinrichtungen, die Infrarotstrahlung abgeben. Ein auf dieser Seite zwischen den Heizeinrichtungen und der Seitenwand vorgesehener, als Hauptreflektor bezeichneter Reflektor sorgt dafür, dass von den Heizelementen ausgehende, nach hinten gerichtete Strahlung in das Heizmodul in Richtung auf einen Vorformling zurück reflektiert wird. Anstelle des Begriffes Hauptreflektor wird in der Fachliteratur auch der Begriff Primärreflektor verwendet.

Auf der Gegenseite und im Bodenbereich des Heizmodules sind weitere Reflektorelemente vorgesehen, die üblicherweise als Gegenreflektor und Bodenreflektor bezeichnet werden.

Aufgabe der Reflektoren ist, eine Erwärmung von Vorformlingen mit möglichst geringem Wärmeverlust in dem Heizmodul zu gewährleisten.

Die Reflektoren können aus unterschiedlichen Materialien, z. B. Aluminium oder Keramik, hergestellt werden.

Die Erfindung richtet sich auf Reflektoren, insbesondere Hauptreflektoren, die aus keramischen Materialien bestehen.

Die US 2017/0135153 A1 offenbart Heizkästen mit Heizeinheiten, von denen mehrere übereinander in einem solchen Heizkasten angeordnet werden. Jede Einheit besteht aus einer Heizröhre und einem zugehörigen Rückreflektor. Der Rückreflektor weist endständig Halteglieder auf und wird zum Zwecke der Austauschbarkeit mit diesen Haltegliedern auf endständige Bereiche des Heizelementes aufgeschoben. Beide zusammen werden eine Einheit bildend dann in seitliche Schächte des Heizkastens eingeschoben. Versagt die Heizröhre, muss nicht die gesamte Heizeinheit ausgetauscht werden, sondern der Rückreflektor kann auf eine andere Heizröhre aufgeschoben und dadurch weiterverwendet werden.

Ein Problem ist, dass keramische Bauteile, wie z.B. die erwähnten Reflektoren, relativ große herstellungsübliche Größentoleranzen aufweisen. In bekannten Heizmodulen werden die Reflektoren in z.B. Rahmen oder Schienen angeordnet, wobei zu kleine Reflektoren wackeln und zu große nachgearbeitet werden müssen, was relativ aufwändig ist.

Aufgabe der Erfindung ist es, derartige Heizmodule so zu verbessern, dass eine einfachere Halterung und Fixierung der Reflektoren möglich ist.

Gelöst wird diese Aufgabe mit einem Heizmodul, das die kennzeichnenden Merkmale des Anspruches 1 aufweist.

Die Erfindung betrifft die Befestigung insbesondere des Hauptreflektors an der Seitenwand des Heizmoduls. Der Hauptreflektor kann wie weiter unten beschrieben auch aus einzelnen Segmenten aufgebaut sein, die entsprechend befestigt werden können. Erfindungsgemäß wird an dem Reflektor bzw. den Segmenten ein Verbindungsbereich in Form eines Schwalbenschwanzes ausgebildet, der wie weiter unten beschrieben erfindungsgemäß, in einer entsprechenden Spange aus Stahl, insbesondere Federstahl am Heizmodul aufgenommen werden kann. Insbesondere wenn die Spange aus thermostabilem Federstahl hergestellt ist und entsprechend konturiert ist, lassen sich mit einer solchen Verbindung Toleranzen in der Herstellung des Reflektors bzw. der Segmente und eventuelle thermische Effekte beim Aufheizen und Abkühlen des Heizmoduls gut kompensieren.

Dieser Aspekt ist nicht zwingend auf Hauptreflektoren beschränkt, sondern kann auch generell bei keramischen Reflektoren im Heizmodul wie z.B. dem Gegen- und Bodenreflektor Anwendung finden. Es kann sich dabei um Reflektoren mit üblichen Formen und Eigenschaften, aber auch um den weiter unten beschriebenen Hauptreflektor handeln.

Bei einem gemäß diesem Aspekt der Erfindung vorgesehenen Heizmodul erfolgt die Verbindung zwischen Reflektor bzw. den Reflektorsegmenten mit der Seitenwand demnach über eine Schwalbenschwanzverbindung mit einer universellen Spange aus Stahl, insbesondere Federstahl, die den Reflektor bzw. die Segmente innerhalb der bei keramischen Materialien herstellungsüblichen Toleranzen aufnimmt, ohne dass die Spange dafür individuell an jedes Segment bzw. jeden Reflektor angepasst werden muss. Die Kontur und Vorspannung der Spange passt sich an den Schwalbenschwanz an und fixiert den Reflektor bzw. die Segmente über drei Anlageflächen.

Vorteilhaft können in der Spange ein oder mehrere elastische Sollbiegebereiche vorgesehen sein. Mit dem Begriff Sollbiegebereich sind solche Bereiche gemeint, in denen sich die Spange bei Krafteinwirkung primär elastisch verbiegt, während die anderen Bereiche der Spange ihre ursprüngliche Ausrichtung beibehalten. Dadurch wird erreicht, dass die Spange Toleranzen in dem Schwalbenschwanz kompensieren kann und gleichzeitig über einen möglichst großen Bereich flächig an dem Schwalbenschwanz anliegt und diesen effektiv fixiert. Solche Sollbiegebereiche können z.B. dadurch bereits bei der Herstellung der Spange vorgesehen werden, indem dort bereits eine Vorbiegung vorgesehen ist oder das Spangenmaterial dort auf andere Weise biegeschwächer ausgeführt wird.

Durch den Einsatz eines vorteilhafterweise temperaturfesten Federstahls bleiben der Reflektor bzw. die Segmente auch nach Temperatureinwirkungen durch die Spange fixiert.

Vorteilhaft ist, dass eine in Serie gefertigte Spange aus Federstahl eingesetzt werden kann und zum Fügen von Spange und Schwalbenschwanz keine weitere Umformung erforderlich ist.

Es ist weiterhin vorteilhaft, dass die Spange länger ausgeführt ist als der von ihr zu haltende Schwalbenschwanz. In diesem Fall ist nicht nur keine Formpassung zwischen Schwalbenschwanz und Klammer vorgesehen, die Spange soll vielmehr über den Schwalbenschwanz hinausragen und dann zurücklaufen. Auch auf diese Weise werden die elastischen Halteeigenschaften der Klammer verbessert. Die Spange kann z.B. um 1% bis 15%, bevorzugt um 2% bis 10%, bevorzugt um mehr als 5 % länger als der Schwalbenschwanz ausgeführt sein. Gemeint ist damit, dass der Bereich der Spange zwischen ihren Schenkeln länger ist als der Abstand zwischen Oberkante und Unterkante des Schwalbenschwanzes.

Ein vorteilhafter Aspekt der Erfindung betrifft den Hauptreflektor. Bevorzugt ist demnach vorgesehen, dass in dem Hauptreflektor in horizontaler Richtung, d. h. in Förderrichtung des Transportweges durch das Heizmodul, von Stegen getrennte

Vertiefungen bzw. Nuten vorgesehen sind. Profil und Dimensionierung der Nuten sind so gewählt, dass in ihnen jeweils eine röhrenförmige Heizeinrichtung derart angeordnet werden kann, dass die Nuten einen Teil des Umfangs der röhrenförmigen Heizeinrichtung umgeben.

In der Regel werden die Nuten so dimensioniert, dass sich ihre Wandbereiche z. B. über den halben Umfang der Heizröhren erstrecken. Denkbar und selbstverständlich durch die Erfindung abgedeckt sind aber auch Nuten, die einen geringeren oder größeren Bereich abdecken. Es ist auch nicht zwingend, dass die Nuten ein teilkreisförmiges Profil aufweisen. Denkbar sind selbstverständlich auch V-förmige Profile bzw. eckige Profile, um nur einige Beispiele zu nennen.

Das Gleiche gilt für die Heizeinrichtungen. In der Regel wird es sich dabei um röhrenförmige Strahler handeln. Denkbar sind aber selbstverständlich auch andere Formen.

In der Regel betrifft die Erfindung aber übereinander und parallel zueinander angeordnete Heizröhren, die jeweils in einer Nut des zwischen ihnen und der Seitenwand angeordneten Hauptreflektors aufgenommen sind.

Ein wesentlicher Vorteil der Erfindung besteht darin, dass die von den Heizeinrichtungen nach hinten, also in Richtung der Seitenwand, gerichtete Strahlung gebündelt und weitgehend gerichtet in den Strahlungsraum des Heizmodules zurückreflektiert wird. Verluste aufgrund diffuser Reflexion, wie sie z. B. bei einem Reflektor mit glatter Oberfläche auftreten, sind dabei minimiert. Die Stege zwischen den Nuten dienen dabei als Schattenkanten und sorgen für eine Strahlungsbegrenzung.

Die Verarbeitung keramischer Materialien ist nicht unproblematisch. Mit zunehmender Größe des üblicherweise im Sinterverfahren hergestellten Bauteiles nehmen auch z.B. die Bruchgefahr und herstellungsbedingte Fertigungstoleranzen zu.

Eine Ausgestaltung der Erfindung sieht daher vor, dass der Hauptreflektor nicht aus einem Stück, sondern aus mehreren Teilsegmenten besteht. Diese lassen sich in aller Regel einfacher und reproduzierbarer bei geringerer Bruchgefahr herstellen.

Denkbar ist z. B. wie in einer weiteren Ausgestaltung der Erfindung vorgesehen, dass die Segmente Teilabschnitten des Hauptreflektors entlang vertikaler und/oder horizontaler Trennlinien entsprechen.

Eine Möglichkeit ist z. B. den Reflektor aus mehreren vertikal verlaufenden Segmenten zusammenzusetzen.

Selbstverständlich und wie im Weiteren beschrieben ist auch eine zusätzliche Segmentierung entlang einer bzw. mehrerer horizontaler Trennlinien möglich. Eine besonders bevorzugte Ausgestaltung der Erfindung betrifft einen Hauptreflektor, der aus solchen Segmenten aufgebaut ist, die jeweils nur einem in vertikaler und horizontaler Richtung begrenzten Teilabschnitt des Hauptreflektors entsprechen.

Gemäß einer bevorzugten Ausgestaltung ist vorgesehen, dass solche Segmente jeweils einen in den Heizkanal weisenden horizontal verlaufenden Mittelsteg aufweisen. Von diesem Mittelsteg erstrecken sich Wandabschnitte der Nut, die jedoch nur einem Teil des Profils einer Nut entsprechen. Im einfachsten Fall definiert der Wandabschnitt die Hälfte des Profils einer Nut. In diesem Fall lässt sich der Reflektor aus gleichen Segmenten aufbauen, wobei jeweils zwei übereinander angeordnete Segmente eine vollständige Nut definieren. Mit anderen Worten jeweils zwei Segmente teilen sich in vertikaler Richtung eine Nut. In horizontaler Richtung können die Segmente entsprechend aneinander gesetzt werden, bis die gewünschte Reflektorbreite erreicht ist.

Wie oben erwähnt ist es vorteilhaft, wenn die Segmente in der angesprochenen Ausgestaltung jeweils zu beiden Seiten des Mittelstegs jeweils die Hälfte des Nutprofils bereitstellen. Dann lässt sich ein Reflektor in besonders einfacher Weise aus gleichen Segmenten aufbauen. Denkbar ist aber auch, dass die vom Mittelsteg sich erstreckenden Wandabschnitte unterschiedlich dimensioniert sind. Auch dann könnte der Aufbau des Reflektors durch gleiche Segmente erfolgen. Es wäre jedoch erforderlich, bei dem Zusammenfügen die Orientierung der Segmente entsprechend zu berücksichtigen, was den Aufwand etwas höher macht.

Unabhängig davon ist ein wesentlicher Vorteil bei dieser Ausgestaltung der Segmente, dass der Mittelsteg relativ dünn, d. h. mit der bei der Verarbeitung von Keramikmaterialien möglichen Mindestdicke hergestellt werden kann. Würde die Trennebene, wie es ebenfalls möglich ist, durch den Mittelsteg verlaufen, dann müssten beide Mittelsteganteile der beteiligten aneinandergrenzenden Segmente jeweils die entsprechende Mindestdicke aufweisen, was zu einer ungewünschten Dicke und damit zu einem entsprechenden größeren vertikalen Abstand der Heizstrahler führen würde. Außerdem reicht es bei dieser Ausgestaltung, ein Segment auszutauschen, um Länge und Breite des Mittelstegs zu variieren. Länge, d.h. die Erstreckung in den Strahlungsraum, und Breite des Mittelstegs sind die beiden wesentlichen Einstellgrößen, die den unerwünschten Strahlerpitch beeinflussen.

Bei der angesprochenen Ausgestaltung kann weiterhin vorgesehen sein, dass die freien Enden der Wandabschnitte der Nuten abgeschrägt sind. Werden die Segmente in vertikaler Richtung aneinandergefügt, geraten die freien Enden der Wandabschnitte der Nuten in Anlage und definieren dann einen schräg verlaufenden Spalt, durch den keine bzw. deutlich geringere Strahlung hindurchtreten kann, als dies bei nicht abgeschrägten freien Enden der Nutabschnitte der Fall wäre, die dann einen mit der Strahlung fluchtenden Spalt bilden würden.

Wie eingangs bereits erwähnt kann auf dem Hauptreflektor bzw. seinen Segmenten auf ihrer Rückseite ein Verbindungsbereich ausgebildet sein, der in einem dazu korrespondierenden, an der Seitenwand des Heizmoduls angeordneten Gegenstück fixierbar ist. Vorzugsweise weist der Verbindungsbereich die Form eines Schwalbenschwanzes auf und das Gegenstück ist eine Spange aus Federstahl.

Im Folgenden soll die Erfindung anhand mehrerer Abbildungen weiter erläutert werden.
- Fig. 1: zeigt im Querschnitt ein Ausführungsbeispiel des Heizmoduls,
- Fig. 2: zeigt ein Ausführungsbeispiel des Reflektors,
- Fig. 3a: zeigt ein Segment, das bei Segmentierung des Reflektors in Fig. 2 entlang der horizontalen und vertikalen Trennlinien erhalten werden kann,
- Fig. 3b: zeigt das Segment aus Fig. 3a mit eingesetzten Teilbereichen von Heizstrahlern,
- Fig. 4a: zeigt im Querschnitt einen Teilbereich des Heizmodules in dem ein Reflektor über eine Schwalbenschwanzverbindung mit der Seitenwand des Heizmoduls verbunden ist, und
- Fig. 4b: zeigt einen Ausschnitt aus Fig. 4a, bei dem die Spange im Biegebereich ausgelenkt ist.

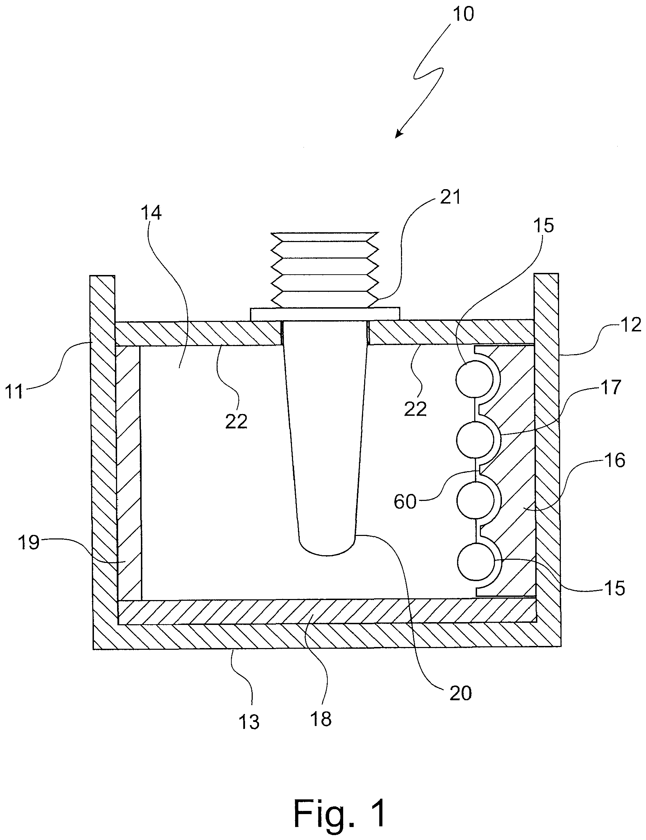

Fig. 1 zeigt einen Schnitt durch ein Heizmodul 10, das Seitenwände 11, 12 und eine Bodenwand 13 aufweist, die einen Strahlungsraum 14 begrenzen. Im Bereich der Seitenwand 12 sind mehrere röhrenförmige Heizeinrichtungen 15 in vertikaler Richtung entlang der Seitenwand 12 übereinander angeordnet. Zwischen den Heizeinrichtungen 15 und der Seitenwand 12 ist ein Hauptreflektor 16 angeordnet, in dem durch Stege 60 getrennte Nuten 17 ausgebildet sind, die die Heizeinrichtungen 15 aufnehmen und dann einen Teil des Umfanges der Heizeinrichtungen 15 umgeben. Die Heizeinrichtungen 15 und die Nuten 17 erstrecken sich dabei in horizontaler Richtung entlang der Seitenwand des Heizmoduls 10 bzw. in Transportrichtung eines aus mehreren Heizmodulen aufgebauten Heizkanals.

Weiterhin sind ein die Bodenwand 13 abdeckender Bodenreflektor 18 und ein die Seitenwand 11 abdeckender Gegenreflektor 19 vorgesehen. Die Befestigung der Reflektoren ist nicht dargestellt. Sie kann auf übliche Weise erfolgen, z.B. durch Halterung in einem Rahmen bzw. durch Einsetzen in Schienen.

In das Heizmodul 10 eingesetzt ist ein Kunststoffvorformling 20, der im Bereich seines Halses 21 auf einer oberen Abdeckung 22 des Heizmoduls 10 gehalten ist und dessen unterer zu verformender Bereich in den Strahlungsraum 14 hineinragt.

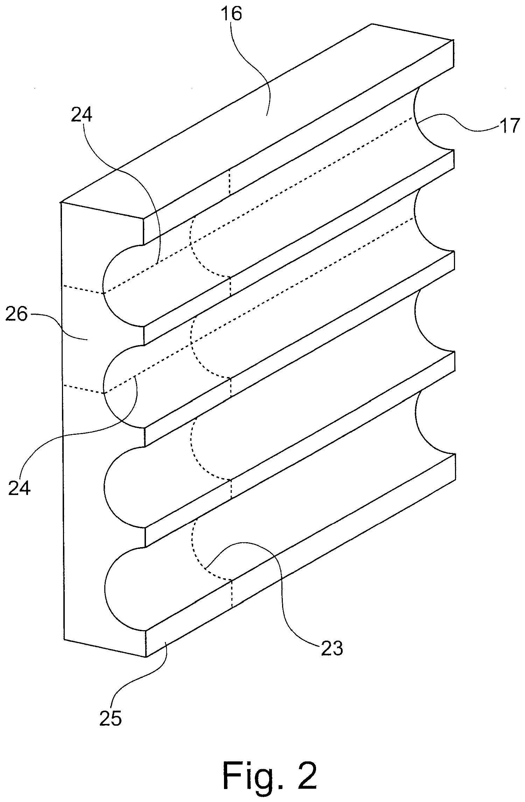

Fig. 2 zeigt den Hauptreflektor 16 aus Fig. 1 in perspektivischer Darstellung. Zu erkennen ist, dass sich die Nuten 17 in Längsrichtung durch den Hauptreflektor 16 erstrecken. Befestigt werden kann der Reflektor 16 an der nicht dargestellten Seitenwand eines Heizmoduls auf beliebige Weise, z. B. durch Verkleben oder durch eine Verbindung auf z.B. Nut/Federbasis, worauf weiter unten noch eingegangen wird.

Wie bereits ausgeführt, wird die Fertigung von keramischen Bauteilen mit zunehmender Größe schwieriger. Es ist deswegen in einer weiteren Ausgestaltung der Erfindung vorgesehen, den Hauptreflektor aus mehreren Segmenten aufzubauen. In Fig. 2 sind vertikale und horizontale Linien 23 und 24 angedeutet, die die Größe und Konfiguration möglicher Segmente verdeutlichen sollen. So ist es z. B. möglich einen Reflektor 16 aus mehreren vertikalen Teilabschnitten 25 zusammenzusetzen. Der Teilabschnitt 25 entspricht dem Bereich des Reflektors 16 bis zur Linie 23. Mehrere solcher Segmente 25 in horizontaler Richtung aneinandergefügt ergeben dann den Reflektor.

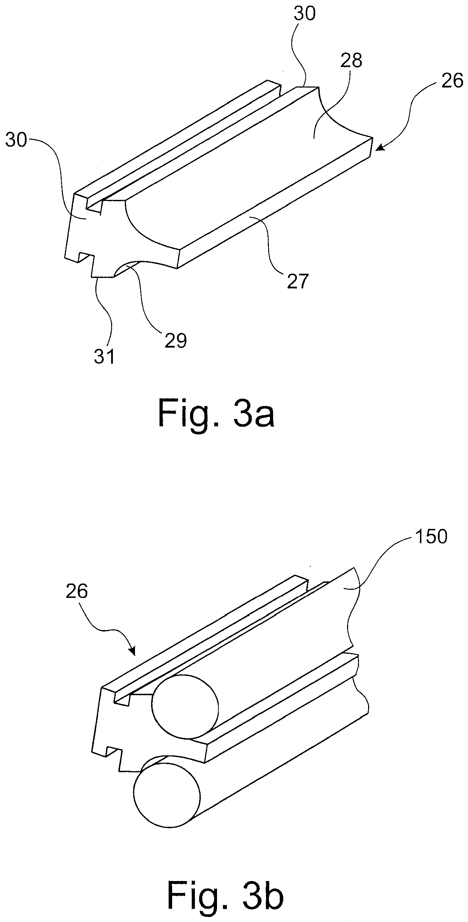

Ein Segment mit einer Konfiguration entlang der Linien 23 und 24, also sowohl in horizontaler als auch in vertikaler Hinsicht begrenzt, zeigt Fig. 3a. Das hier dargestellte Segment 26 weist einen Mittelsteg 27 auf, von dem aus sich zwei Wandabschnitte 28 und 29 einer Nut erstrecken. An dem zur Seitenwand des Heizmoduls weisenden Ende des Segmentes 26 ist ein Verbindungsbereich 30 ausgebildet, der z. B. ein Einsetzen des Segmentes in eine entsprechende an der Seitenwand befestigte Schiene ermöglicht.

Die Segmente 26 werden übereinander und nebeneinander angeordnet, wobei jeweils zwei übereinander angeordnete Segmente mit ihren Wandabschnitten ein vollständiges Nutprofil ergeben. Um in dem Zwischenbereich zwischen den beiden vertikal aneinandergefügten Segmenten Strahlungsverluste zu vermeiden, sind die freien Enden 30 und 31 der Wandabschnitte 28 und 29 abgeschrägt ausgebildet. Auf diese Weise wird erreicht, dass der Spalt zwischen den Segmenten keine oder kaum Strahlung durchlässt. Anders wäre dies bei nicht abgeschrägten Wandbereichen. Der Spalt zwischen den Segmenten würde dann senkrecht auf die Seitenwand weisen und wäre damit fluchtend zur Strahlung der Heizröhren.

Fig. 3b zeigt das Segment 26 mit darin angeordneten Heizstrahlern 150.

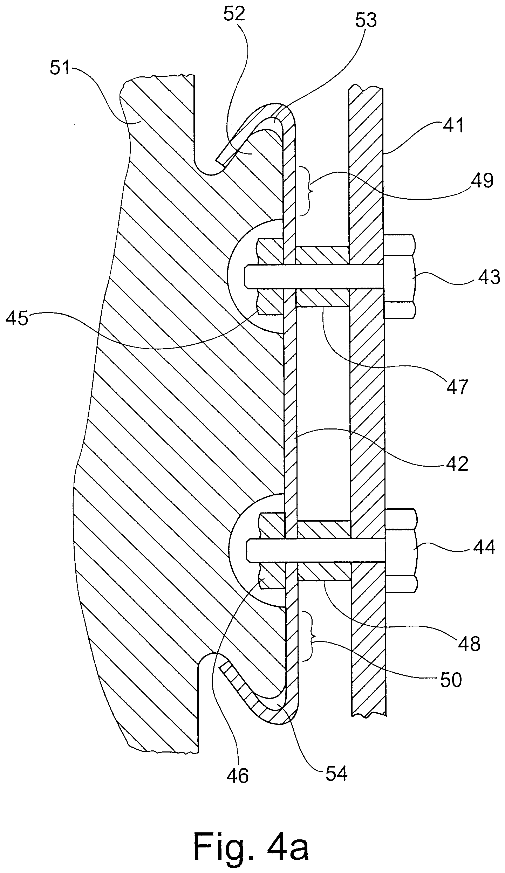

Wie bereits oben ausgeführt betrifft ein weiterer Aspekt der Erfindung die Befestigung des Hauptreflektors an der Seitenwand des Heizmoduls. In diesem Zusammenhang zeigt Fig. 4a im Teilausschnitt eine Seitenwand 41 eines nicht weiter dargestellten Heizmoduls. An der Seitenwand 41 ist eine Spange 42 mit Schrauben 43 und 44 fixiert, die jeweils in eine Mutter 45, 46 eingeschraubt sind. Zwischen Spange 42 und Seitenwand 41 sind Abstandshalter 47, 48 vorgesehen, die einen thermischen Abstand zwischen Spange 42 und Seitenwand 41 einstellen und weiterhin dafür sorgen, dass die Spange 42 Spiel hat. Weiterhin weist die Spange Sollbiegebereiche 49, 50 auf, in denen bei Krafteinwirkung primär eine elastische Verformung der Spange erfolgt. Diese Sollbiegebereiche sind im dargestellten Ausführungsbeispiel dadurch realisiert, dass die Spange eine herstellungsseitig vorgesehene Vorbiegung aufweist.

Die Spange ist so konfiguriert, dass sie einen an einem Hauptreflektor 51 ausgebildeten Verbindungsbereich 52 in Form eines Schwalbenschwanzes aufnehmen kann. Im gezeigten Fall ist die Spange 42 so konfiguriert, dass zwischen ihr und der oberen bzw. unteren Kante des Schwalbenschwanzes 52 jeweils eine Lücke 53, 54 verbleibt. Die Spange ist also länger als der Schwalbenschwanz. In der Lücke 53, 54 liegt die Spange 42 also nicht an dem Schwalbenschwanz 52 an, womit sicher gestellt wird, dass im Toleranzbereich liegende eventuell größer dimensionierte Verbindungsbereiche auch noch problemlos in der Spange aufgenommen werden können.

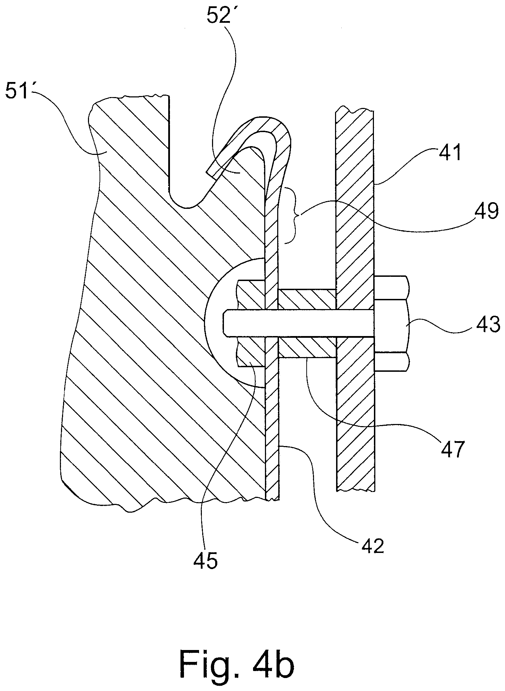

Fig. 4b zeigt einen Ausschnitt der Fig. 4a. Einziger Unterschied ist, dass in diesem Fall ein Verbindungsbereich 52' vorliegt, der in vertikaler Erstreckung etwas länger dimensioniert ist als der in Fig. 4a gezeigte. Die Folge ist, dass die Spange 42 aufgrund ihrer Vorspannung im Biegebereich 49 in Richtung der Seitenwand 41 ausgelenkt wird und sich mit ihrem freien Ende bzw. Schenkel über eine etwas kürzere Strecke an den Verbindungsbereich 52' anlegt als in Fig. 4a. Auch in diesem Fall ist aber ein weitgehender flächiger Kontakt zwischen Spange und Verbindungsbereich und damit eine gute Fixierung des Reflektors gewährleistet.

Bei beiden Ausführungsbeispielen der Figuren 4a und 4b ist vorgesehen, dass die Spange länger dimensioniert ist als der Schwalbenschwanz, d.h. der Bereich der Spange zwischen ihren Schenkeln ist länger als die Strecke zwischen Oberkante und Unterkante des Schwalbenschwanzes. Diese Dimensionierung unterstützt die Biegeeigenschaften der Spange.

Es versteht sich, dass auch der üblicherweise in Heizmodulen vorhandene Bodenreflektor und Gegenreflektor entsprechend, wie für den Hauptreflektor in Fig. 4a und b gezeigt, in dem Heizmodul befestigt werden können.

## Patentansprüche

1. Heizmodul eines Heizkanals einer Formmaschine zur Herstellung von Behältern aus Vorformlingen, in dem Vorformlinge aus thermoplastischem Kunststoff erwärmt werden, mit zwei gegenüberliegenden Seitenwänden, bevorzugt auch mit einem Boden und einer oberen Abdeckung, wobei zwischen an einer Seitenwand des Heizmoduls parallel und übereinander angeordneten röhrenförmigen Heizeinrichtungen, die Infrarotstrahlung abgeben, und der Seitenwand ein Hauptreflektor vorgesehen ist, sowie optional im Bodenbereich ein Bodenreflektor und an der gegenüberliegenden Seitenwand ein Gegenreflektor vorgesehen sind, wobei mindestens der Hauptreflektor aus keramischem Material besteht, **dadurch gekennzeichnet, dass** der Hauptreflektor (51) über eine Schwalbenschwanzverbindung mit der Seitenwand verbunden ist, wobei an dem Reflektor (51, 51') jeweils ein Verbindungsbereich (52, 52') in Form eines Schwalbenschwanzes ausgebildet ist, der jeweils mit einer an der Seitenwand (41) befestigen Spange (42) aus Stahl, insbesondere Federstahl, mit an den Schwalbenschwanz angepassten Abmessungen fixierbar ist.

2. Heizmodul nach Anspruch 1, **dadurch gekennzeichnet, dass** auch der Bodenreflektor (18) und/oder der Seitenreflektor (19) aus keramischem Material bestehen und über jeweils eine Schwalbenschwanzverbindung, wie in Anspruch 1 definiert, mit dem Bodenbereich (13) bzw. der gegenüberliegenden Seitenwand (11) verbunden sind.

3. Heizmodul nach Anspruch 1 oder 2, **dadurch gekennzeichnet, dass** die Spange (42) Sollbiegebereiche (49, 50) aufweist, in denen sich die Spange primär bei Krafteinwirkung verbiegt.

4. Heizmodul nach einem der Ansprüche 1 bis 3, **dadurch gekennzeichnet, dass** die Spange (42) länger ausgeführt ist als der von ihr zu haltende Schwalbenschwanz (52, 52').

5. Heizmodul nach Anspruch 4, **dadurch gekennzeichnet, dass** die Spange (42) in einem Bereich von 1% bis 15%, bevorzugt 2% bis 10% länger als der Schwalbenschwanz (52, 52') ausgeführt ist.

6. Heizmodul nach einem der vorhergehenden Ansprüche, **dadurch gekennzeichnet, dass** der Hauptreflektor (51) aus mehreren Segmenten aufgebaut ist, die über jeweils eine Schwalbenschwanzverbindung mit der Seitenwand verbunden sind.

7. Heizmodul nach einem der Ansprüche 1 bis 6, **dadurch gekennzeichnet, dass** in dem Hauptreflektor (16) Nuten (17) vorgesehen sind, die sich horizontal in Richtung des vom Heizmodul gebildeten Heizkanals erstrecken, wobei jede Nut (17) bezüglich ihres Profils und ihrer Dimensionierung so ausgebildet sind, dass in ihr eine Heizeinrichtung (15) des Heizmoduls (10) derart anordenbar sind, dass jeweils eine Nut (17) mit ihrer Wand einen Teil des Umfangs der Heizeinrichtung (15) umgibt.

8. Heizmodul nach Anspruch 6, **dadurch gekennzeichnet, dass** die Segmente jeweils Teilabschnitten des Hauptreflektors (16) entlang vertikal und/oder horizontal verlaufender Trennlinien (23, 24) entsprechen, wobei bevorzugt in dem Hauptreflektor (16) Nuten (17) vorgesehen sind, die sich horizontal in Richtung des vom Heizmodul gebildeten Heizkanals erstrecken, wobei jede Nut (17) bezüglich ihres Profils und ihrer Dimensionierung so ausgebildet sind, dass in ihr eine Heizeinrichtung (15) des Heizmoduls (10) derart anordenbar sind, dass jeweils eine Nut (17) mit ihrer Wand einen Teil des Umfangs der Heizeinrichtung (15) umgibt..

9. Heizmodul nach Anspruch 8, **dadurch gekennzeichnet, dass** die Segmente in horizontaler und vertikaler Richtung begrenzten Teilabschnitten entsprechen.

10. Heizmodul nach Anspruch 9 **dadurch gekennzeichnet, dass** die Segmente (26) jeweils einen in den Heizkanal weisenden horizontal verlaufenden Mittelsteg (27) aufweisen, dessen beide Längsseiten jeweils einen Wandabschnitt (28, 29) einer Nut ausbilden dergestalt, dass jeweils zwei übereinander und angrenzend angeordnete Segmente (26) gemeinsam das Profil einer vollständigen Nut ausbilden.

11. Heizmodul nach Anspruch 10, **dadurch gekennzeichnet, dass** die freien Enden (30, 31) der Wandabschnitte (28, 29) der Nuten mit auf beiden Seiten übereinstimmenden Abschrägungen versehen sind.

## Claims

1. Heating module of a heating channel of a moulding machine for the production of containers made from preforms, in which thermoplastic preforms are heated, with two opposite side walls, preferably, also with a bottom side and a top cover, wherein a main reflector is provided between the side wall and tubular heating devices emitting infrared radiation parallel and arranged on top of one another on a side wall of the heating module, as well as, optionally, a floor reflector in the floor area and a counter-reflector on the opposite side wall are provided, wherein at least the main reflector is made of ceramic material, **characterized in that** the main reflector (51) is connected to the side wall via a dovetail connection, wherein, on each reflector (51, 51'), a connecting area (52, 52') is formed in the form of a dovetail, each of which can be fixed using a clasp (42) made of metal, particularly spring steel, attached to the side wall (41) with dimensions adapted to the dovetail.

2. Heating module according to Claim 1, **characterized in that** the floor reflector (18) and/or the side reflector (19) are also made of ceramic material and are each connected to the bottom area (13) and the opposite side wall (11) by means of a dovetail connection as defined in Claim 1.

3. Heating module according to Claim 1 or 2, **characterized in that** the clasp (42) comprises nominal bending areas (49, 50) at which the clasp bends primarily when force is applied.

4. Heating module according to any one of the Claims 1 to 3, **characterized in that** the clasp (42) is made longer than the dovetail (52, 52') to be adhered by it.

5. Heating module according to Claim 4, **characterized in that** the clasp (42) is designed to be longer than the dovetail (52, 52') at a range of 1% to 15%, preferably at a range of 2% to 10%.

6. Heating module according to any one of the preceding claims, **characterized in that** the main reflector (51) is constructed of a plurality of segments, each of which is connected to the side wall by a dovetail connection.

7. Heating module according to any one of Claims 1 to 6, **characterized in that** grooves (17) are provided in the main reflector (16) that extend horizontally in the direction of the heating channel formed by the heating module, wherein each groove (17) is designed with regard to its profile and dimensioning so that a heating device (15) of the heating module (10) can be arranged in it in such a way that a groove (17) with its wall surrounds part of the circumference of the heating device (15).

8. Heating module according to Claim 6, **characterized in that** the segments each correspond to subsections of the main reflector (16) along vertically and/or horizontally running dividing lines (23, 24), wherein grooves (17) are preferably provided in the main reflector (16) that extend horizontally in the direction of the heating channel formed by the heating module, wherein each groove (17) is designed with regard to its profile and dimensioning in such a way that a heating device (15) of the heating module (10) can be arranged in it such a way that a groove (17) with its wall surrounds part of the circumference of the heating device (15).

9. Heating module according to Claim 8, **characterized in that** the segments correspond to delimited subsections in the horizontal and vertical directions.

10. Heating module according to Claim 9 **characterized in that** the segments (26) each have a horizontally running central bar (27) pointing into the heating channel, the two long sides of which each form a wall section (28, 29) of a groove in such a way that two segments (26) arranged one on top of the other and adjacent each other cumulatively form the profile of a complete groove.

11. Heating module according to Claim 10, **characterized in that** the free ends (30, 31) of the wall sections (28, 29) of the grooves are provided with bevels that are congruent on both sides.

## Revendications

1. Module de chauffage d'un canal de chauffage d'une machine de moulage pour la fabrication de récipients à partir de préformes dans lequel module sont chauffées des préformes en matière thermoplastique et lequel est muni de deux parois latérales et, de préférence, également d'un fond et d'un couvercle supérieur, un réflecteur principal étant prévu entre la paroi latérale et des dispositifs de chauffage tubulaires émettant un rayonnement infrarouge parallèlement superposés agencés contre une paroi latérale du module de chauffage, et un réflecteur de fond et un contre-réflecteur optionnels étant respectivement prévus dans la zone de fond et contre la paroi latérale opposée, le réflecteur principal au moins étant constitué d'un matériau céramique, **caractérisé en ce que** le réflecteur principal (51) est relié à la paroi latérale par un assemblage en queue d'aronde, le réflecteur (51, 51') présentant respectivement une zone de liaison (52, 52') façonnée en forme de queue d'aronde, laquelle peut respectivement être fixée au moyen d'une bride (42) en acier, notamment en acier à ressorts, fixée à la paroi latérale (41) et dont les dimensions sont adaptées à la queue d'aronde.

2. Module de chauffage selon la revendication 1, **caractérisé en ce que** le réflecteur de fond (18) et/ou le réflecteur latéral (19) sont également constitués d'un matériau céramique et sont respectivement reliés à la zone de fond (13) et à la paroi latérale opposée (11) par un assemblage en queue d'aronde tel que défini dans la revendication 1.

3. Module de chauffage selon la revendication 1 ou 2, **caractérisé en ce que** la bride (42) présente des zones de flexion de consigne (49, 50) dans lesquelles la bride se déforme en premier lieu sous l'effet d'une force.

4. Module de chauffage selon l'une des revendications 1 à 3, **caractérisé en ce que** la bride (42) est dimensionnée de façon à être plus longue que la queue d'aronde (52, 52') qu'elle maintient.

5. Module de chauffage selon la revendication 4, **caractérisé en ce que** la bride (42) est réalisée avec une longueur de l'ordre de 1 % à 15 % supérieure et de préférence de 2 % à 10 % supérieure à celle de la queue d'aronde (52, 52').

6. Module de chauffage selon l'une des revendications précédentes, **caractérisé en ce que** le réflecteur principal (51) est composé de plusieurs segments respectivement reliés à la paroi latérale au moyen d'un assemblage en queue d'aronde.

7. Module de chauffage selon l'une des revendications 1 à 6, **caractérisé en ce que** sont prévues dans le réflecteur principal (16), des rainures (17) qui s'étendent horizontalement dans le sens du canal de chauffage formé par le module de chauffage, le profil de chaque rainure (17) étant conformé et dimensionné pour qu'un dispositif de chauffage (15) du module de chauffage (10) puisse être agencé dans celle-ci de façon à ce que chaque rainure (17) entoure avec sa paroi une partie de la circonférence du dispositif de chauffage (15).

8. Module de chauffage selon la revendication 6, **caractérisé en ce que** les segments correspondent respectivement à des sections du réflecteur principal (16) le long der lignes de séparation (23,24) verticales et/ou horizontales, des rainures (17) étant de préférence prévues dans le réflecteur principal (16), lesquelles rainures (17) s'étendent horizontalement dans le sens du canal de chauffage formé par le module de chauffage, le profil de chaque rainure (17) étant conformé et dimensionné pour qu'un dispositif de chauffage (15) du module de chauffage (10) puisse être agencé dans celle-ci de façon à ce que chaque rainure (17) entoure avec sa paroi une partie de la circonférence du dispositif de chauffage (15).

9. Module de chauffage selon la revendication 8, **caractérisé en ce que** les segments correspondent à des sections horizontalement et verticalement limitées.

10. Module de chauffage selon la revendication 9, **caractérisé en ce que** les segments (26) présentent respectivement une partie médiane (27) horizontalement agencée dans le canal de chauffage et dont les deux côtés longitudinaux forment respectivement une section de paroi (28, 29) d'une rainure de façon à ce que deux segments (26) juxtaposés l'un au-dessus de l'autre forment ensemble le profil d'une rainure complète.

11. Module de chauffage selon la revendication 10, **caractérisé en ce que** les bords libres (30, 31) des sections de paroi (28, 29) des rainures sont chanfreinés de façon correspondante.
